Europäisches Patentamt

European Patent Office

Office européen des brevets

(19)

(11) Veröffentlichungsnummer: **0 077 981**
**B1**

(12) **EUROPÄISCHE PATENTSCHRIFT**

(45) Veröffentlichungstag der Patentschrift:
24.07.85

(51) Int. Cl.⁴: **H 01 H 33/53,** G 01 L 7/06,
G 01 N 9/10

(21) Anmeldenummer: 82109523.9

(22) Anmeldetag: 14.10.82

(54) Einrichtung zur Kontrolle der Dichte eines elektronegativen Gases in der Kapselung einer elektrischen Schaltanlage.

(30) Priorität: 28.10.81 DE 3142746

(43) Veröffentlichungstag der Anmeldung:
04.05.83 Patentblatt 83/18

(45) Bekanntmachung des Hinweises auf die Patenterteilung:
24.07.85 Patentblatt 85/30

(84) Benannte Vertragsstaaten:
AT BE CH DE FR GB IT LI NL SE

(56) Entgegenhaltungen:
DE - A - 2 024 808
DE - A - 2 711 797
DE - A - 2 926 260
DE - B - 1 201 455
US - A - 2 000 308

(73) Patentinhaber: Siemens Aktiengesellschaft, Berlin und München Wittelsbacherplatz 2, D-8000 München 2 (DE)

(72) Erfinder: Poth, Rainer, Freiherr-von-Stein-Strasse 2,
D-6368 Bad Vilbel (DE)
Erfinder: Gleim, Johannes Werner, Espenstrasse 35,
D-6230 Frankfurt-Griesheim (DE)

**Bechreibung**

Die Erfindung bezieht sich auf eine Einrichtung zur Kontrolle der Dichte eines elektronegativen Gases in der Kapselung einer elektrischen Schaltanlage nach dem Oberbegriff des Anspruches 1.

Es ist bereits eine Einrichtung der im Oberbegriff des Anspruches 1 genannten Art bekannt, die in einem Gaskreislaufsystem für einen Druckgas-Leistungsschalter eingebaut ist. Die bekannte Einrichtung dient zur Aufrechterhaltung einer konstanten Gasmenge im Kreislaufsystem. Mit ihr wird elektrisch die Gaszufuhr aus einer Gasversorgungsanlage in den Gaskreislauf und die Gasabfuhr aus dem Gaskreislauf geregelt. Eine visuelle Anzeige der Dichte des im Gaskreislauf befindlichen Gases ist nicht vorgesehen (DE-B-1 201 455).

Es ist auch eine Vorrichtung bekannt, mit der Dichteänderungen eines in einem Behälter eingeschlossenen Gases visuell anzeigbar sind. Diese bekannte Vorrichtung ist jedoch schon wegen der Vielzahl ihrer Elemente sehr aufwendig. Sie ist zudem, wegen einer den Behälter durchgreifenden und sich bei Dichteänderungen verschiebenden Stange, nicht frei von Dichtproblemen (US-A-2 000 308).

Ferner ist bereits ein Gasdichte-Anzeiger bekannt, der einen Körper aufweist, dessen vom Auftrieb abhängiges Gewicht zur Anzeige gebracht wird. Der Auftriebskörper kann eine, allerdings sehr zerbrechliche, dünnwandige Glaskugel sein, die an einem Arm einer Balkenwaage befestigt ist, an deren anderem Arm sich ein Gegengewicht befindet, das ein anderes spezifisches Gewicht als der Auftriebskörper besitzt. Im Gefolge von Temperaturänderungen auftretende Druckänderungen des elektronegativen Gases beeinflussen die Lage des Waagebalkens, wenn überhaupt, nur kurzzeitig. Der Gasinhalt des Auftriebskörpers folgt mit allenfalls nur geringer Trägheit der Temperatur und damit dem Druck des Umgebungsgases. Es stellt sich somit bei Änderungen der Temperatur und damit des Druckes schon in kurzer Zeit wieder ein Gleichgewichtszustand ein, der an der Stellung des Waagebalkens erkennbar ist. Wenn jedoch die auf den Auftriebskörper einwirkende Auftriebskraft infolge Verlustes von elektronegativem Gas sinkt, sinkt auch der Auftriebskörper und der ihm zugeordnete Waagebalken. Mit der Lageveränderung des Waagebalkens sind somit Gasverluste visuell feststellbar, jedoch nur solange, wie der leicht zerbrechliche Auftriebskörper und die Lagerung des Waagebalkens intakt sind. Das spezifische Gewicht des Auftriebskörpers ist beispielsweise durch Beschlag veränderbar. Die Lagerung des Waagebalkens ist schlag- und stossempfindlich (DE-A-2 711 797).

Es ist auch eine Störlichtbogen-Schutzvorrichtung für gasisolierte, vollmetallgekapselte Hochspannungsschaltanlagen bekannt, bei welcher der Innenraum eines Faltenbalges ständig unter dem Innendruck der zugeordneten Schaltanlage steht. Mit der bekannten Vorrichtung sind jedoch nur Druckänderungen des Isoliergases anzeigbar (DE-U-7 929 553).

Es ist ausserdem bekannt, Temperatureinflüsse auf geschlossene Manometer-Gefässe, beispielsweise durch Bimetallstreifen, zu kompensieren (DE-C-857 691, DE-B-1 170 159).

Der Erfindung liegt die Aufgabe zugrunde, die Einrichtung der im Oberbegriff des Anspruches 1 genannten Art so auszubilden, dass Dichteänderungen des in der Kapselung befindlichen elektronegativen Gases frei von Dichtproblemen und Überdehnungen des Faltenbalges auf einfache Weise visuell sichtbar gemacht werden können.

Die gestellte Aufgabe wird erfindungsgemäss durch die im kennzeichnenden Teil des Anspruches 1 angegebene Ausbildung gelöst.

Zweckmässige Aus- und Weiterbildungen des Erfindungsgegenstandes sind in den Ansprüchen 2 bis 5 angegeben. Ein Verfahren zum Justieren der Einrichtung nach den Ansprüchen 1 bis 5 ist im Anspruch 6 angegeben.

In der Zeichnung sind mehrere Ausführungsbeispiele rein schematisch dargestellt. Es zeigt

Fig. 1 eine Wand einer Kapselung einer elektrischen Schaltanlage im Schnitt und einen in der Wand angeordneten Gasdichte-Anzeiger mit einem Fortsatz,

Fig. 2 zwei im rechten Winkel aneinanderstossende Wände einer Kapselung einer elektrischen Schaltanlage im Schnitt und einen hinter der einen Wand angeordneten Gasdichte-Anzeiger mit zwei verschiedenen Anzeigegliedern.

*Beispiel 1*

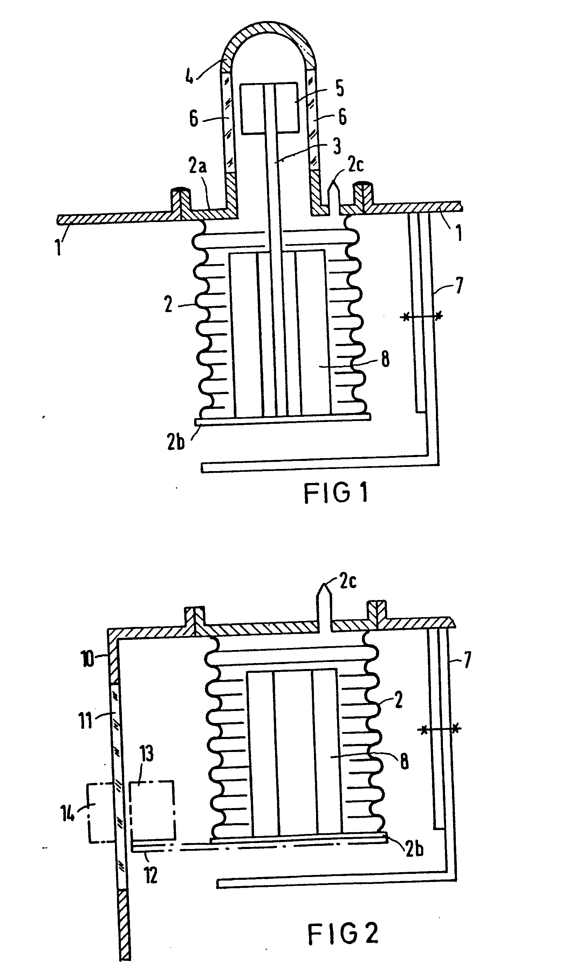

In Fig. 1 ist mit 1 eine Wand einer Kapselung einer im übrigen nicht dargestellten elektrischen Schaltanlage bezeichnet. Die Kapselung enthält ein elektronegatives Gas wie etwa $SF_6$ oder dergleichen, das unter einem Druck von beispielsweise 1,3 bar steht.

Hinter der Wand 1 ist ein gasdichter Behälter 2 angeordnet, der im Ausgangszustand unter einem vorgegebenen Innendruck von zum Beispiel 1 bar steht. Im vorliegenden Falle ist der Behälter 2 ein mit einer Kopfwand 2a und einem Boden 2b verschlossener Faltenbalg.

Die Kopfwand 2a des Behälters 2 ist in der Wand 1 gasdicht eingeschweisst.

Der Boden 2b des Behälters 2 ist bei Dichteänderungen des elektronegativen Gases in Längsrichtung des Behälters 2 veränderbar, während auf Temperaturänderungen zurückgehende Druckänderungen des elektronegativen Gases keinen längenverändernden Einfluss auf den Behälter 2 ausüben. Letzteres ist darauf zurückzuführen, dass sich zwischen dem elektronegativen Gas und dem Gasvolumen des Behälters in kurzer Zeit ein Temperaturausgleich einstellt, wenn sich die Temperatur des elektronegativen Gases infolge Änderung der Aussentemperatur oder aufgrund eines Störlichtbogens ändert. Bei gleicher Temperatur bleibt jedoch auch die Druckdifferenz zwischen dem elektronegativen Gas und dem Gasinhalt des Behälters 2 gleich, so dass keine Kräfte auftreten, welche den Behälter 2 längen oder kürzen.

Ganz anders verhält sich die Anordnung bei Veränderungen des Füllgrades der Kapselung. Hier tritt eine isotherme Dichteveränderung des elektronegativen Gases ein, wodurch sich der Behälter 2, je nachdem ob Gas eingefüllt wird oder entweicht, solange längt oder verkürzt, bis die Dichte seines Gasinhaltes gleich der momentanen Dichte des elektronegativen

Gases ist. Die dabei auftretende Lageveränderung des Bodens 2b wird zur Anzeige der Änderung des Dichteverhältnisses herangezogen.

Im Beispiel nach Fig. 1 ist am Boden 2b ein Stab 3 befestigt. Der Stab 3 durchragt die Kopfwand 2a des Behälters 2 und ragt in einen Fortsatz 4 hinein, der aus der Wand 1 herausragt.

Am freien Ende des Stabes 3 ist ein Anzeigeglied 5 befestigt, das in Fenstern 6 des Fortsatzes 4 sichtbar ist. Jeweils der obere Rand und der untere Rand der Fenster 6 können als Kontrollmarken für Lageveränderungen des Anzeigegliedes 5 dienen. Der Fortsatz 4 kann jedoch auch ganz transparent sein und beispielsweise Striche als Kontrollmarken besitzen (nicht dargestellt).

Die beschriebene Anordnung wird so justiert:

Zunächst wird die Kapselung bei offenem Behälter 2 evakuiert. Dabei dehnt sich der Behälter 2 unter dem herrschenden Luftdruck bis zur Anlage an einen Aussenanschlag 7 aus. Sodann wird der Behälter 2 an der Stelle 2c verschlossen. Schliesslich wird das Isoliergas bis zum Solldruck in die Kapselung gepumpt.

Sobald der isothermisch steigende Druck des Isoliergases den Behälterinnendruck überschreitet, wird der Behälter 2 verkürzt. Die Verkürzung ist am Anzeigeglied 5 ablesbar.

Um eine zu starke Verkürzung bei einem über den Solldruck hinausgehenden Druck des Isoliergases zu vermeiden, ist im Behälter 2 ein Innenanschlag 8 angeordnet. Im Beispiel ist der Innenanschlag 8 am Boden 2a befestigt. Sein freies Ende hat zur Kopfwand 2a einen Abstand, der noch innerhalb einer zulässigen Verkürzung des Behälters 2 liegt.

*Beispiel 2*

Eine Schaltanlagenkapselung ist hier mit 10 bezeichnet.

In der Schaltanlagenkapselung 10 kann, wie dargestellt, ein Blickfenster 11 angeordnet sein, durch welches Lageveränderungen des Bodens 2b beobachtbar sind. Auch das Blickfenster 11 kann mit Kontrollmarken versehen sein. Der Behälterboden, der Behälter, der Innenanschlag und der Aussenanschlag tragen im Beispiel 2 die gleichen Bezugszeichen wie im Beispiel 1. Durch die beschriebene Anordnung sind gegenüber der Ausbildung nach Beispiel 1 der Stab 3, der Fortsatz 4 und das Anzeigeglied 5 entbehrlich.

Der Boden 2b nach Beispiel 2 kann jedoch auch eine bis zum Blickfenster 11 herangeführte Verlängerung 12 besitzen, wie strichpunktiert dargestellt.

Falls kein Blickfenster 11 in der Schaltanlagenkapselung 10 erwünscht oder möglich ist, kann, wie ebenfalls strichpunktiert dargestellt, an der Verlängerung 12 des Bodens 2b oder in nicht dargestellter Weise am Boden 2b des Behälters 2 selbst ein Permanentmagnet 13 befestigt sein, mit dem ein ausserhalb der Schaltanlagenkapselung 10 befindlicher magnetisierbarer Anzeiger 14 beeinflussbar ist.

Wenn die Schaltanlagenkapselung 10 aus nicht magnetisierbarem Material besteht, kann der Anzeiger 14, wie dargestellt, direkt an die Schaltanlagenkapselung 10 angesetzt werden.

Das Justieren der Anordnung nach Fig. 2 erfolgt in gleicher Weise wie das Justieren der Anordnung nach Fig. 1.

**Patentansprüche**

1. Einrichtung zur Kontrolle der Dichte eines elektronegativen Gases in der Kapselung einer elektrischen Schaltanlage, mit den Merkmalen:

1.1 in der Kapselung (1; 10) ist ein in sich gasdichter, aus einem Faltenbalg bestehender Behälter (2) angeordnet, der unter einem vorgegebenen Innendruck steht und einen Boden (2b) aufweist,

1.2 die Lage des Bodens (2b) ist bei Dichteänderungen des elektronegativen Gases in Längsrichtung des Behälters (2) veränderbar,

1.3 im Behälter (2) ist ein Innenanschlag (8) vorgesehen, mit dem der Weg des Bodens (2b) zum Behälterkopf (2a) begrenzbar ist, gekennzeichnet durch die Merkmale:

1.4 der Boden (2b) trägt ein ausschliesslich im Behälter (2) oder in der Kapselung (10) befindliches Glied (3; 12), dessen bei Lageveränderung des Bodens (2b) eintretende Lageveränderung visuell nach aussen sichtbar gemacht ist,

1.5 ferner ist der Boden (2b) des Behälters (2) in einem einstellbaren Abstand von einem Aussenanschlag (7) untergriffen.

2. Einrichtung nach Anspruch 1, dadurch gekennzeichnet, dass das zur visuellen Anzeige von Dichteänderungen ausgebildete Glied (3) aus einem Stab besteht, der den Behälter (2) und die Kopfwand (2a) des Behälters (2) durchragt und in einen aus der Kapselung (1) herausragenden, wenigstens teilweise durchsichtigen Fortsatz (4) hineinragt sowie am freien Ende ein Anzeigeglied (5) trägt, dem mindestens eine untere und eine obere Kontrollmarke am durchsichtigen Teil des Fortsatzes (4) zugeordnet ist.

3. Einrichtung nach Anspruch 2, dadurch gekennzeichnet, dass der durchsichtige Teil des Fortsatzes (4) ein Fenster (6) ist, dessen oberer Rand die obere Kontrollmarke und dessen unterer Rand die untere Kontrollmarke bildet.

4. Einrichtung nach Anspruch 1, dadurch gekennzeichnet, dass die Kapselung (10) ein Blickfenster (11) aufweist, durch das Lageveränderungen des Bodens (2b) beobachtbar sind und das dem Boden (2b) zugeordnete Kontrollmarkierungen aufweist, und dass der Boden (2b) mit einer bis zum Blickfenster (11) herangeführten Verlängerung versehen ist, die das zur visuellen Anzeige ausgebildete Glied (12) bildet.

5. Einrichtung nach Anspruch 1 oder 4, dadurch gekennzeichnet, dass das zu visuellen Anzeige von Dichteänderungen ausgebildete Glied (12) einen Permanentmagneten (13) trägt, mit dem trägheitslos ein ausserhalb der Kapselung (10) befindlicher magnetisierbarer Anzeiger (14) beeinflussbar ist.

6. Verfahren zum Justieren der Einrichtung nach Anspruch 1 bis 5, dadurch gekennzeichnet, dass zuerst die Kapselung (1; 10) bei offenem Behälter (2) evakuiert und die dabei auftretende Längung des Behälters (2) durch den Aussenanschlag (7) begrenzt wird und dass sodann der Behälter (2) verschlossen sowie anschliessend das Isoliergas bis zum Solldruck in die Kapselung (1; 10) eingelassen wird.

## Claims

1. Device for monitoring the density of an electro negative gas in the casing of an electrical switching station, with the features:

1.1 in the casing (1; 10) there is arranged a vessel (2), comprising a bellows, which is in itself gastight, and which is under a predetermined internal pressure and has a floor (2b),

1.2 the position of the floor (2b) is variable in the longitudinal direction of the vessel (2) in the event of changes in density of the electro negative gas,

1.3 in the vessel (2) there is provided an internal stop (8) with which the path of the floor (2b) to the vessel ceiling (2a) can be limited,
characterised by the features:

1.4 the floor (2b) carries an element (3, 12) that is located exclusively in the vessel (2) or in the casing (10), whose change in position occurring with a change in position of the floor (2b) is made outwardly visually perceptible,

1.5 in addition the floor (2b) of the vessel (2) is limited below at an adjustable distance by an external stop (7).

2. Device according to claim 1, characterised in that the element (3) formed for the visual indication of density changes comprises a rod which penetrates the vessel (2) and the ceiling (2a) of the vessel (2) and projects into an at least partially transparent extension (4) projecting out of the casing (1), and at its free end carries an indicating element (5), with which there is associated at least one lower and one upper monitoring mark on the transparent part of the extension (4).

3. Device according to claim 2, characterised in that the transparent part of the extension (4) is a window (6), whose upper edge forms the upper monitoring mark and whose lower edge forms the lower monitoring mark.

4. Device according to claim 1, characterised in that the casing (10) has a viewing window (11), through which position changes in the floor (2b) can be seen, and which has monitoring marks associated with the floor (2b), and in that the floor (2b) is provided with an extension extended to the viewing window (11) which forms the element (12) constructed for the visual indication.

5. Device according to claim 1 or 4, characterised in that the element (12) constructed for the visual indication of density changes carries a permanent magnet (13), with which a magnetisable indicator (14) situated outside the casing (10) can be influenced in an inertia-free manner.

6. Process for adjusting the device according to claims 1 to 5, characterised in that first of all the casing (1; 10) is evacuated with the vessel (2) open, and the then occurring lengthening of the vessel (2) is limited by the external stop (7), and in that the vessel (2) is then closed and next the insulating gas is admitted into the casing (1; 10) up to the desired pressure.

## Revendications

1. Dispositif pour contrôler la densité d'un gaz électronégatif situé dans le blindage d'un dispositif de commutation électrique, ayant les caratéristiques suivantes:

1.1 dans le blindage (1; 10 ) se trouve disposée une enceinte (2) étanche au gaz et constituée par un soufflet et qui est placée sous une pression intérieure prédéterminée et possède un fond (2b);

1.2 la position du fond (2b) peut être modifiée suivant la direction longitudinale de l'enceinte (2), dans le cas d'une modification de la densité du gaz électronégatif,

1.3 dans l'enceinte (2) il est prévu une butée intérieure (8) à l'aide de laquelle le déplacement du fond (2b) en direction de la tête (2a) de l'enceinte peut être limité,
remarquable par les caractéristiques suivantes:

1.4 le fond (2b) porte un organe (3; 12), qui est situé exclusivement dans l'enceinte (2) ou dans le blindage (10) et dont le décalage en position, qui se produit lors de la variation de la position du fond (2b), est visible de l'extérieur,

1.5 en outre une butée extérieure (7) s'engage par dessous le fond (2b) de l'enceinte (2), en en étant à une distance réglable.

2. Dispositif suivant la revendication 1, caractérisé par le fait que l'organe (3) conçu pour réaliser l'affichage de variations de la densité est constitué par un barreau qui traverse l'enceinte (2) et la paroi supérieure (2a) de cette enceinte et pénètre dans un appendice saillant (4) au moins partiellement transparent et faisant saillie hors du blindage (1), et porte, sur son extrémité libre, un élément d'affichage (5) auquel au moins un repère inférieur de contrôle et un repère supérieur de contrôle sont associés, sur la partie transparente de l'appendice saillant (4).

3. Dispositif suivant la revendication 2, caractérisé par le fait que la partie transparente de l'appendice saillant (4) est une fenêtre (6), dont le bord supérieur constitue le repère supérieur de contrôle et dont le bord inférieur constitue le repère inférieur de contrôle.

4. Dispositif suivant la revendication 1, caractérisé par le fait que le blindage (10) comporte un voyant (11) à travers lequel on peut observer des variations de la position du fond (2b) et qui comporte des repères de contrôle associés au fond (2b), et que ce fond (2b) est muni d'un prolongement s'étendant jusqu'au niveau du voyant (11) à permettre l'affichage.

5. Dispositif suivant la revendication 1 ou 4, caractérisé par le fait que l'élément (12) agencé pour permettre l'affichage de variations de densité, porte un aimant permanent (13), qui est apte à influencer, sans inertie, une aiguille (14) pouvant être aimantée et située à l'extérieur du capot (10).

6. Procédé pour ajuster le dispositif suivant les revendications 1 à 5, caractérisé par le fait que tout d'abord on réalise le vide dans le blindage (1; 10), alors que l'enceinte (2) est couverte, l'allongement apparaissant de l'enceinte (2) étant limité par la butée extérieure (7), et qu'on ferme alors l'enceinte (2) et qu'on introduit ensuite un gaz isolant dans le blindage (1; 10), jusqu'à ce qu'il atteigne la pression de consigne.

FIG 1

FIG 2